(19) Europäisches Patentamt / European Patent Office / Office européen des brevets

(11) **EP 2 540 570 B1**

(12) **EUROPEAN PATENT SPECIFICATION**

(45) Date of publication and mention
of the grant of the patent:
**19.03.2014 Bulletin 2014/12**

(51) Int Cl.:
***B60Q 11/00*** *(2006.01)*

(21) Application number: **12004889.7**

(22) Date of filing: **29.06.2012**

(54) **Method and device for controlling the operation of turn signal indicators assemblies of a vehicle**

Verfahren und Vorrichtung für die Überwachung der Funktion der Fahrtrichtungsanzeiger-Anordnung eines Fahrzeuges

Méthode et dispositif pour contrôle du fonctionnement de ensemble de clignotant pour un véhicule

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.07.2011 IT VI20110178**

(43) Date of publication of application:
**02.01.2013 Bulletin 2013/01**

(73) Proprietor: **Autoelettric S.R.L. Unipersonale
36040 Brendola (VI) (IT)**

(72) Inventor: **Brocco, Gino
35011 Campodarsego (Padova) (IT)**

(74) Representative: **Maroscia, Antonio
Contrà Porti, 21
36100 Vicenza (IT)**

(56) References cited:
**EP-A1- 1 360 088       DE-A1- 10 359 196
DE-A1-102006 015 053    DE-C1- 10 215 486**

**Description**

FIELD OF INVENTION

The present invention generally finds application in the field of vehicle control systems, and particularly relates to a method for controlling the operation of turn signal indicator assemblies for a vehicle.

The invention further relates to a control device operating according to such method.

Background art

It is known that current regulations in the field of vehicles require constant control of the operation of turn signal indicator assemblies, to warn about any failure or faults in such indicators.

Particularly any failure of one or more indicator lamps will be indicated by an increase of the intermittent frequency of the intermittent electric voltage applied thereto.

Also, optical units have been increasingly used, which consist of both normal incandescent lamps and LED light indicators and this configuration is also often used for the turn signal indicator system.

Nevertheless, the electric power absorbed by the incandescent lamps during operation is considerably greater than the average electric power absorbed by LED indicators.

Such marked difference between the electric powers absorbed by the two types of indicators makes it particularly difficult to provide a single control device that can detect both operating states of incandescent lamps and LED indicators.

One solution to this drawback consists in parallel application of a fictitious load to the LED indicators, to increase the total electric power absorbed thereby to a value substantially equal to the power absorbed by each incandescent lamp.

Thus, when all the indicators operate properly, the control device will be designed to detect the same power absorption associated with the incandescent lamps and the LED indicators respectively.

One drawback of this solution is that the application of the fictitious load for as long as intermittent voltage is supplied to the indicator system involves dissipation of a large amount of thermal energy generated by the load due to the joule effect.

Furthermore, such thermal energy may cause a local and dangerous increase of temperatures proximate to the optical unit.

In an attempt to obviate this problem, a number of alternative solutions have been provided for controlling the operation of the LED indicators.

EP1360088 discloses a lighting assembly for vehicles that allows parallel application of the fictitious load to the LED indicators only for a fraction of the intermittent voltage supply time.

The assembly further comprises a power monitoring circuit which is designed to monitor the electric power absorbed by LED indicators at a given time, synchronized with the application of the fictitious load, compare it with a stored reference value and cause an increase of the intermittent frequency if the two values are different.

Thus, the electric energy dissipated by the load due to the joule effect is lower than in the previous case, because the load is connected for a limited time.

One drawback of this solution is that the current reference value can be only determined by knowing the value of the electric current absorbed in the indicator assembly by the LED indicators only.

In fact, the current absorbed by LED indicators will depend on their construction, and may be considerably variable according to the particular configuration of the optical unit that is used in the vehicle.

A further drawback of this solution is that accuracy in detection of the operation of LED indicators is only based on the determination of the electric current absorbed when the fictitious load is added.

The results might be wrong if unexpected drawbacks should occur during such determination of the absorbed current.

Also, an additional drawback of the above invention is its poor flexibility for use in optical units having different electric properties, as it requires manual refresh of the corresponding reference current.

DE102006015053 discloses a method for detecting errors in a turn signal system of a hybrid vehicle, i.e. having both bulb and LED lights including all the features mentioned in the preamble of claim 1, which method still has some of the above mentioned drawbacks.

Particularly the system comprises a turn signal indicator composed of multiple rows of LEDs in parallel arrangements, where each row of LEDs comprises a resistor in series with its respective LEDs.

A comparator circuit measures voltage through the individual resistors and, in case of malfunctioning of one or more LED lights, the opening of its electric circuit generates an abnormal voltage value, and causes a logic circuit coupled to the comparator circuit to trigger an error signal.

It will be understood that, also in this case, the control devices shall be calibrated to the values of the special type of LED installed in the system.

Disclosure of the invention

The object of the present invention is to obviate the above prior art drawbacks, by providing a method of controlling operation of vehicle turn signal indicator assemblies that is particularly efficient and relatively cost-effective.

A particular object of the invention is to provide a method that allows control of the operation of turn signal indicator assemblies that can use any LED type and require no previous storage of the absorption current value of the particular LED indicators of the vehicle.

A further object of the present invention is to provide a method that allows dissipation of a small amount of electric and thermal energy during operation and does not cause temperature increase proximate to the optical units of the vehicle.

Yet another object of the present invention is to provide a method that reduces error probability in detecting the operation of the indicator assembly of the vehicle.

Another important object of the present invention is to provide a method that allows control of the operation of the turn signal indicator assembly, in various types of vehicles, without requiring a refreshing step by an operator.

These and other objects, as it will be move apparent hereafter, are fulfilled by a method for controlling the operation of turn signal indicator assemblies of a vehicle, as defined in claim 1.

With this particular configuration of the invention, the control of the turn signal indicator system of a vehicle can be particularly accurate in failure detection and afford considerable power savings as well as dissipation of a small amount of thermal energy.

Furthermore, the same control system may be easily used on vehicles comprising optical units having different electric properties and total numbers of installed LED indicators.

Thus, cost advantages may be obtained by providing a system for controlling the operation of an indicator system of a vehicle that has a large-scale and wide-range operation.

In another object, the invention provides a device for controlling the operation of a turn signal indicator system of a vehicle, that can be obtained with the above method and as defined in claim 7.

Advantageous embodiments of the invention are obtained in accordance with the dependent claims.

Brief description of the drawings

Further features and advantages of the invention will become more apparent upon reading of the detailed description of a few preferred, non-exclusive embodiments of a method for controlling the operation of a turn signal indicator system of a vehicle according to the invention, which are described as non-limiting examples with the help of the accompanying drawings in which:

FIG. 1 is a block diagram of the steps of the control method of the invention;
FIG. 2 is a schematic block view of a control device of the invention, mounted to a motor vehicle;
FIG. 3 is a schematic view of a first detail of the device of Fig. 1;
FIG. 4 is a schematic view of a second detail of the device of Fig. 1;
FIG. 5 is a sequence of voltage-time and current-time Cartesian diagrams, showing the operation of the device of Fig. 1.

Detailed description of a preferred embodiment

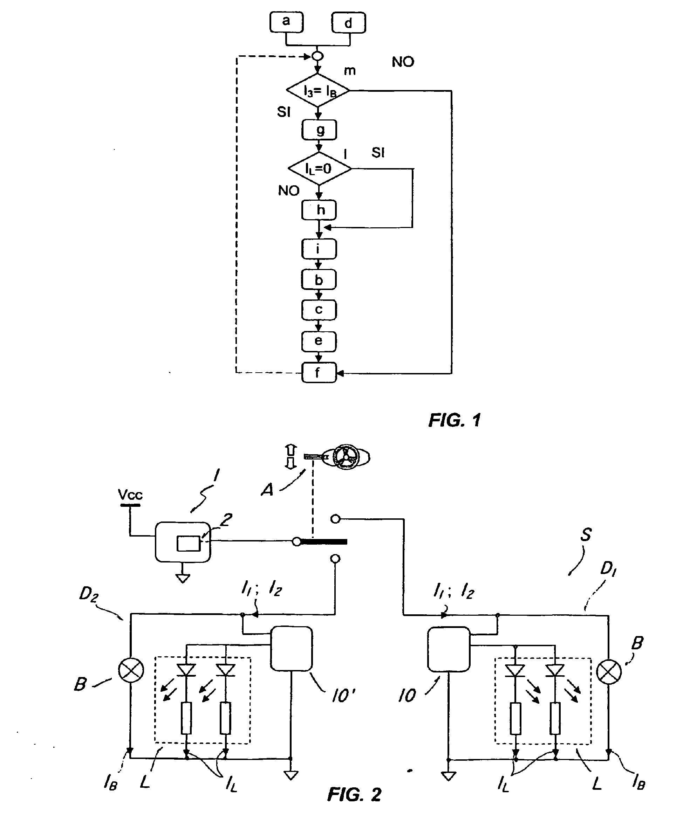

Referring to FIG. 1, there is shown a schematic representation of the method for controlling turn signal indicator assemblies S for a vehicle, according to the invention.

By way of example, each turn signal indicator assembly S may comprise two lighting series $D_1$, $D_2$ each associated with a respective turn direction.

Each lighting series may include at least one incandescent lamp, generally referenced B, and at least one LED indicator, generally referenced L, which are designed to be simultaneously powered when the user actuates the turn direction indicating lever.

Furthermore, each series $D_1$, $D_2$ may include one or more optical units connected to the vehicle in its front, rear and side portions respectively.

According to the invention, the method comprises, not necessarily in the represented order, a step a) of applying an intermittent electric voltage V having predetermined frequency F and period = 1/F to at least one of the lighting series $D_1$, $D_2$.

The following step is a step b) of measuring a first value of the electric current $I_1$ absorbed by the series of indicators $D_1$, $D_2$ during a first predetermined sub-period $(T_1)$.

Then, the method includes a step c) of generating an electric parameter P associated with the electric current $I_1$ absorbed during the first sub-period $T_1$ and a step d) of defining a reference electric current value $I_{RIF}$.

If the value of the parameter P is substantially different from thee reference value $I_{RIF}$ then a step e) will be carried out, for generating an error signal E.

Conversely, if the parameter P and the reference value $I_{RIF}$ are substantially equal, the step e) of generating the error signal E may not be carried out, or the error signal E may be a substantially zero amplitude signal.

Conveniently, if there is an error signal E, there will be a subsequent step f) of increasing the frequency F of the intermittent electric voltage V to warn the user of the malfunction of the assembly S, as required by applicable regulations.

Such frequency increase may not occur if the error signal E has a substantially zero amplitude.

According to a peculiar feature of the invention, before the step e) of generating the error signal E, there will be a step g) of measuring a second value $I_2$ of the electric current absorbed by the series $D_1$, $D_2$ in a second sub-period $T_2$ distinct from the first sub-period $T_1$.

Furthermore, the electric parameter P will be equal to the difference between the first $I_1$ and second $I_2$ values of the absorbed current, to provide a single reference value $I_{RIF}$ for any type of LED indicator L.

In accordance with an exemplary configuration of the invention, the method may control a turn signal indicator assembly S that can use common incandescent lamps P having a power of about 21 W.

In this configuration, the current absorbed by each incandescent lamp B may range from 1.5 A to 1.8 A, and be, for instance, substantially close to 1.75 A.

Conveniently, the reference current value $I_{RIF}$ may fall in the same range to simulate, at least in the first sub-period $T_1$ an absorption by the LED indicators that is substantially similar to that of an incandescent lamp B, by leveling the intensity of the detected quantities.

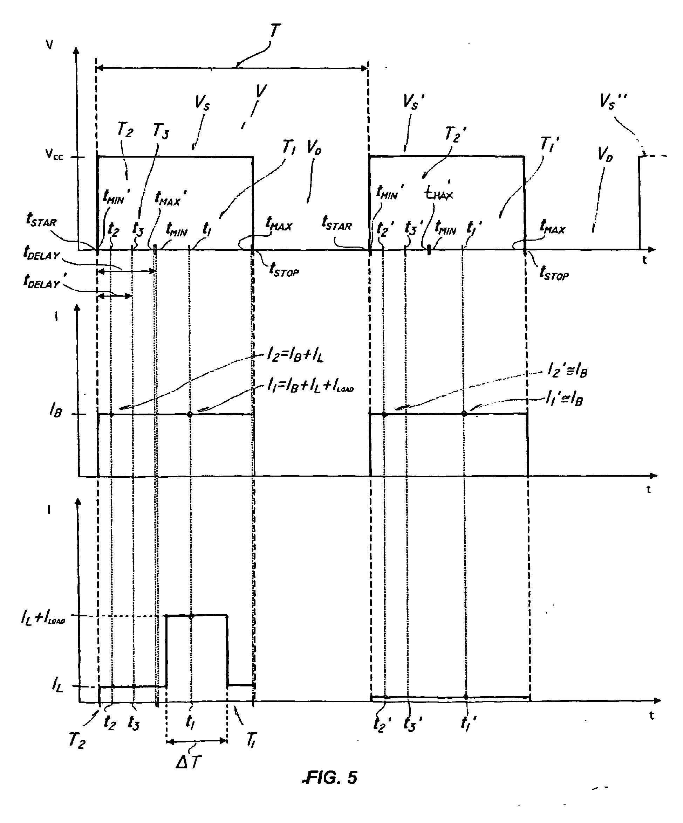

In the diagram as shown in FIG. 5, the electric voltage V may be substantially periodic with substantially constant values of base intermittency frequency D and period T.

Furthermore, the waveform of the supply voltage V may be substantially a square wave.

Thus, each voltage period may include a rising edge $V_s$ in which voltage V increases from a minimum zero value to a constant maximum value $V_{cc}$ that is equal to or lower than the voltage of the battery of the vehicle, and a falling edge $V_d$ in which voltage V decreases from the maximum value $V_{cc}$ to the zero value.

Typically, in proper operating conditions of the indicator system the intermittent voltage frequency F may range from 80 to 90 cycles per minute and the resulting intermittency period will range from 650 milliseconds to 750 milliseconds.

Furthermore, the duration of the rising edge of the supply voltage V may be about half the period thereof.

Preferably, the first sub-period $T_1$ may substantially fall within the rising edge $V_s$ of the intermittent electric voltage V.

Furthermore, the first sub-period $T_1$ may be defined between a first infimum of time $t_{min}$ and a first supremum of time $t_{max}$.

Conveniently, the first infimum of time $t_{min}$ may follow the start time $t_{start}$ of the rising edge $V_s$ of voltage V and may have a first predetermined delay $t_{delay}$ therefrom.

Also, the first supremum of time $t_{max}$ may be substantially coincident with the end time $t_{stop}$ of the rising edge $V_s$.

For example, the first sub-period $T_1$ may have a duration $t_{max}$ - $t_{min}$ of about 200 milliseconds and the first infimum of time $t_{min}$ may have a first delay $t_{delay}$ of more than 150 milliseconds from the start time $t_{start}$ of the rising edge $V_s$.

Furthermore, the first current value $I_1$ may be measured at a time $t_1$ next to the first infimum of time $t_{min}$ of the first sub-period $T_1$.

Preferably, the first current value $I_1$ may be substantially proportional to the sum of the electric current $I_B$ absorbed by each incandescent lamp B and the electric current $I_L$ absorbed by each LED indicator L.

The generated electric parameter P may be substantially proportional to the value of the electric current $I_1$ as measured in the first sub-period $T_1$.

Furthermore, such parameter P may be a quantity of the same type as that associated to the above defined reference value $I_{RIF}$, so that a direct comparison thereof is possible.

Conveniently, the measures of the first $I_1$ and second $I_2$ current values may be obtained by a single acquisition of the electric current absorbed by the series $(D_1, D_2)$, made at the times $t_1$, $t_2$, which fall within the first $T_1$ and second $T_2$ sub-periods respectively.

Alternatively, the measures of the first $I_1$ and second $I_2$ current values may be determined from the mean of a plurality of current samples acquired in a corresponding predetermined measuring range, each comprising the times $t_1$, $t_2$ respectively.

The second sub-period $T_2$ may precede the first sub-period $T_1$ and have a shorter duration, falling within the duration $(t_{stop} - t_{start})$ of the rising edge $V_s$.

Furthermore, the second sub-period $T_2$ and the first sub-period $T_1$ may be contiguous, so that the sum of their durations is substantially equal to the duration $(t_{stop} - t_{start})$ of the rising edge $V_s$.

The second sub-period $T_2$ may be defined by a second infimum of time $t_{min}$', which substantially corresponds to the start time $t_{start}$ of the rising edge $V_s$ and by a second supremum of time $t_{max}$', which substantially coincides with the first infimum $t_{min}$ of the first sub-period $T_1$.

By way of example, the second sub-period $T_2$ may have a duration $(t_{max}$' - $t_{min}$') of about 150 milliseconds and the measure of the second absorbed current value $I_2$ may be determined at a time $t_2$ corresponding to about 125 milliseconds delay from the second infimum of time $t_{min}$' of the second sub-period $T_2$.

Furthermore, the electric parameter P obtained by the difference between the first $I_1$ and second $I_2$ measured values of current absorbed by the series $D_1$, $D_2$ may be a quantity of the same type as the electric quantity associated with the reference value $I_{RIF}$.

Conveniently, the method may comprise, before the step c) of measuring the first current value $I_1$, a step h) of adding a fictitious load LOAD in parallel to one or more LED indicators L of the series $D_1$, $D_2$ during the first subperiod $T_1$.

Particularly, the first current value $I_1$ will be related to the electric current $I_{LOAD}$ absorbed with the fictitious load LOAD.

The fictitious load LOAD may comprise a calibrated electric resistor R connected in parallel to the LED indicator devices L, whose value may be, preferably and by way of example, about 18 Ohm.

Typically, the value of such resistor R may be calculated for the electric current $I_{LOAD}$ to be substantially equal to the current differential between the current $I_B$ absorbed by the incandescent lamp B and the current $I_L$ absorbed by the LED indicators L.

Thus, during the step h), a second current value $I_2$ may be measured, which substantially corresponds to the electric current $I_B$ absorbed by the incandescent lamps B.

In a particularly advantageous embodiment, the fictitious load LOAD may be formed using one or more semiconductor devices, not shown, which may be driven by an appropriate control circuit, not shown.

The first measured value $I_1$ of the current absorbed by the series $D_1$, $D_2$ may be substantially equal to the sum of the electric current $I_B$ absorbed by each incandescent lamp B, the current $I_L$ absorbed by each LED indicator L and the current $I_{LOAD}$ absorbed by the fictitious load LOAD, using this simple formula:

$$I_1 = I_B + I_L + I_{LOAD}$$

The second measured value $I_2$ of the electric current absorbed by the series $D_1$, $D_2$ in the second sub-period $T_2$ may be substantially equal to the sum of the current $I_B$ absorbed by each incandescent lamp B and the current $I_L$ absorbed by each LED indicator L using this simple formula:

$$I_1 = I_B + I_L$$

Here, the second value $I_2$ of the electric current absorbed by the series $D_1$, $D_2$ may be equal to the electric current absorbed thereby without the fictitious load LOAD.

Conveniently, the electric parameter P will be substantially associated with the current $I_{LOAD}$ absorbed by the fictitious load LOAD, and the reference value $I_{RIF}$ may be substantially equal to the value of the electric current $I_{LOAD}$ absorbed by the fictitious load LOAD only.

The error signal E may be generated when the value of the calculated electric parameter P is substantially lower than the reference value $I_{RIF}$.

If the error signal E is generated, the intermittency frequency F may be increased by a value typically close to 40 cycles/minute relative to the normal operation value, to reach a maximum predetermined value of about 120-130 cycles/minute.

Such configuration of the invention affords control of the operating state of the lighting series $D_1$, $D_2$, using a reference value $I_{RIF}$ that only corresponds to the current $I_{LOAD}$ absorbed by a known fictitious load.

Thus, such control may be carried out without requiring the determination of the absorption current $I_L$ associated with the particular LED indicator type L as used in the system S.

Conveniently, the method may include a step i) of periodically detecting the electric current absorbed by at least one series $D_1$, $D_2$ during the first sub-period $T_1$, and the first electric current value $I_1$ may be exclusively measured when such periodic detection detects a current value substantially proportional to the electric current $I_{LOAD}$ absorbed by the load LOAD.

The step i) ensures that the time $t_1$ at which the first electric current value $I_1$ is measured will always come next to that corresponding to the addition of the load LOAD, without requiring a further step for synchronization of the load introduction time and the time $t_1$.

In a particular variant, the method may include a step l) of detecting the electric current $I_L$ absorbed by the LED indicators L only.

This step l) may be carried out after the step a) of applying the intermittent electric voltage V.

Typically, the step l) of detecting the electric current $I_L$ absorbed by the LED indicators L only may be carried out at a time $t_3$ that follows the time $t_2$ in which the second absorbed electric current value $I_2$ is measured.

Conveniently, the time $t_3$ may fall within the second sub-period $T_2$ and may correspond to a second delay time $t_{delay}$', of about 130 milliseconds, from the start time $t_{start}$ of the rising edge $V_s$ of the voltage V.

In a particularly advantageous aspect of the invention, the step h) of adding the fictitious load LOAD may be only carried out upon detection of the electric current $I_L$ absorbed in the step i).

Thus, if a lack of electric current absorbed by one or more of the LED indicators L is detected during the step l), then the first value $I_1$ of absorbed current measured during the step b) will be substantially equal to the sum of the electric current $I_B$ absorbed by the incandescent lamps and the one $I_L$ absorbed by the remaining working LED devices L.

After such measurement, the electric parameter P generated in step c) will be a differential current value close to zero and substantially lower than the reference value $I_{RIF}$ and such value will later promote the generation of the error signal E.

Such configuration of the invention provides an electric parameter P that can only assume a pair of discrete values having respective absolute values associated with a substantially zero current value and with the value of the electric current absorbed by the fictitious load.

Furthermore, the high differential between the pair of discrete values assumed by the parameter P will reduce error probability, when such parameter is compared with the reference value $I_{RIF}$, thereby affording a highly accurate control of the operation of the system S.

Conveniently, there may be also a step m) of detecting a third electric current value $I_3$ substantially co-incident with the value of $I_B$ the electric current absorbed by an incandescent lamp B.

The error signal E may be also generated when the second current value $I_2$ is considerably lower than the third current value $I_3$.

The third current value $I_3$ may be detected along the electric connection that exclusively powers one or more incandescent lamps B and its value may be equal to the value of the current $I_B$ absorbed thereby.

In accordance with such configuration of the invention, if the second measured value of absorbed current is considerably lower than the third current value, the error signal E may be generated without requiring the steps I) of detecting the current absorbed by the LED indicators L only and h) adding the fictitious load LOAD.

Conveniently, the reference current value $I_{RIF}$ may be determined by predetermined mapping ranging between a minimum and a maximum value in response to the change of the amplitude of the intermittent voltage V.

Thus, the change of the amplitude of the intermittent electric voltage V caused by the application thereof to two or more lighting series $D_1$, $D_2$ will be automatically balanced by a corresponding change of the reference value $I_{RIF}$.

This will allow the step e) of comparing the parameter P and the reference value $I_{RIF}$ to be irresponsive to voltage changes V, thereby generating a proper error signal E regardless of the number of powdered lighting series $D_1$, $D_2$.

Furthermore, the steps from b) to I), excluding the step d), may be repeated at each cycle of intermittent application of the voltage V.

The step d) of defining the reference electric current value $I_{RIF}$ may be carried out once and for all, as such reference value may be uniquely associated with the electric current $I_{LOAD}$ absorbed by the fictitious load LOAD.

The illustrated configuration of the invention affords proper operation control on each lighting series $D_1$, $D_2$ during each rising edge $V_s$, $V_s'$,... of electric voltage V, associated with each repetition period therefor.

In a further aspect, the invention relates to a device for controlling a turn signal indicator assembly S for a vehicle which can implement the above method.

As shown in Fig. 2, the device, generally referenced 1, comprises an electronic power supply unit 2 for supplying the lighting series $D_1$, $D_2$ with an intermittent voltage V having predetermined frequency F and period T.

The device 1 further comprises a measuring unit 3 for measuring the values $I_1$, $I_2$ of the electric current absorbed by at least one series $D_1$, $D_2$, in first $T_1$ and second sub-periods $T_2$ respectively.

The measuring unit 3 also comprises a storage area 4 for storing a reference electric current reference value $I_{RIF}$ and comparator means 5, for comparing the absorbed electric current values $I_1$, $I_2$ with the reference value $I_{RIF}$ to generate an error signal E.

Conveniently, the measuring unit 3 is designed to send the error signal E to the power supply unit 2 to increase the frequency F to a maximum predetermined value $F_{MAX}$ in response to the error signal E and indicate the malfunction of the assembly S.

The power supply unit 2 may be powered by the battery of the vehicle, not shown, and be electrically associated with the turn direction selecting lever A that can be actuated by the user.

Furthermore, the electronic power supply unit 2 may be designed to generate a substantially square-wave intermittent voltage V having an intermittency frequency F selectively and discretely adjustable between predetermined minimum and maximum values.

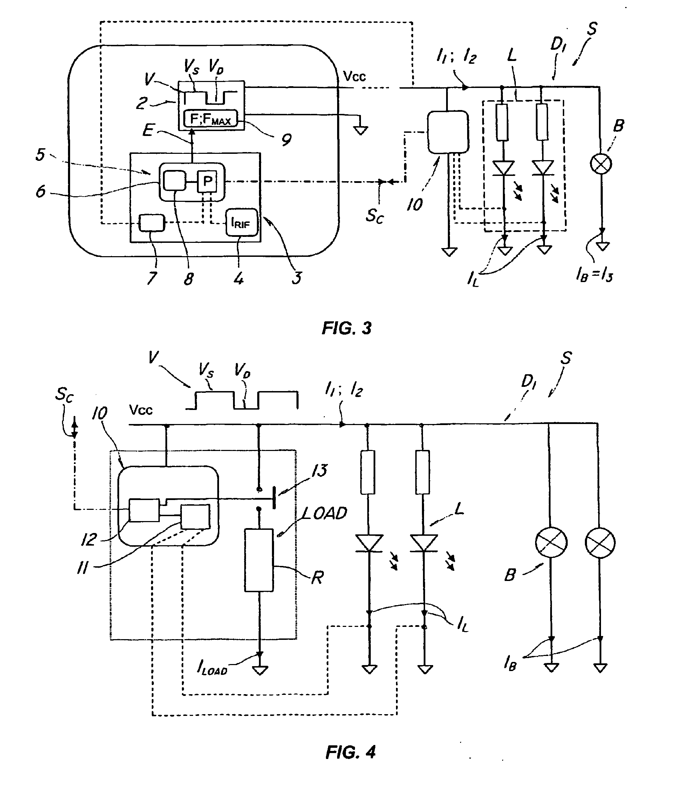

As shown in FIG. 3, the comparator means 5 may include a processor 6, which is electrically connected to the first storage portion 4 and the lighting series $D_1$, $D_2$.

Furthermore, first sensor means 7 may be interposed .between the processor 6 and one or more lighting series $D_1$, $D_2$, for sensing the measured electric current absorbed by the series $D_1$, $D_2$ and convert it into a signal adapted to be detected and processed by the processor 6.

Conveniently, the processor 6 may have a storage portion 8 adapted to store some volatile data associated with the respective measurements of the electric current absorbed by the series $D_1$, $D_2$ during each intermittency cycle.

Also, the storage portion 8 may be adapted to store the measured value, $I_1$ and $I_2$, of absorbed current during the first $T_1$ and second $T_2$ sub-periods and to store the value resulting from the difference therebetween.

Conveniently, the processor 6 may be designed to generate the error signal E by sending it to the power supply unit 2.

Furthermore, the electronic power supply unit 2 may include a detection circuit 9 which is adapted to detect the error signal E and increase the intermittency frequency F for the electric voltage V to the maximum value $F_{MAX}$.

According to the invention, the control device 1 may include at least one peripheral control unit 10, 10', which is adapted to detect current absorption $I_L$ by the LED indicators L of the series $D_1$, $D_2$ in a third sub-period $T_3$ preceding the first, and to add the predetermined fictitious load LOAD in parallel thereto in case of detection of the current $I_L$.

The peripheral control unit 10, 10', as shown in FIG. 4, may include second sensor means 11 for detecting the presence of an electric current $I_L$ absorbed by each of the LED indicators L and generate a measurement signal associated therewith.

Furthermore, each peripheral control unit 10, 10' may include a processing portion 12 for detecting and processing the measurement signal that comes from the second sensor means 11.

The processing portion 12 may be electrically connected to the processor 6 in the measuring unit 3 to send the measurement signal thereto and to receive therefrom a control signal $S_C$ associated with the addition of the fictitious load LOAD.

Furthermore, the processing portion 12 will be electrically connected to electronic switch means 13 which are adapted to add the fictitious load LOAD for a fixed and predetermined addition time $\Delta T$ in response to the control signal sent by the processor 5 and received by the processing portion 12.

The addition time $\Delta T$ during which the fictitious load LOAD is added may be a fraction of the duration ($t_{stop}$ - $t_{start}$) of the rising edge $V_s$ of the supply voltage V. By way of example, the processing portion 12 is designed to add the fictitious load LOAD for an addition time $\Delta T$ of about 40 milliseconds.

The measuring unit 3 is configured to measure the first value $I_1$ of the electric current absorbed by the series $D_1$, $D_2$ during the addition of the fictitious load LOAD and to measure the second value $I_2$ of the current absorbed by the series $D_1$, $D_2$ during the second sub-period $T_2$.

Furthermore, the device 1 may be either entirely integrated in one or more optical units used in the series of indicators $D_1$, $D_2$ of the indicator system S or, inserted in an electronic vehicle controller, not shown.

Alternatively, the peripheral control unit 10, 10' may be directly integrated in one or more optical units used in the series of indicators $D_1$, $D_2$ of the indicator system S whereas the measuring unit 3 may be placed near or in the controller.

FIG. 5 shows a plurality of time diagrams associated with the electric operating quantities of a first exemplary, non-limiting configuration of a control device 1 of the invention.

A reference value $I_{RIF}$ associated with the corresponding current $I_{LOAD}$ absorbed by the known fictitious load LOAD when it receives a DC voltage $V_{cc}$ substantially equal to the intermittent voltage V applied to the indicator system is stored in such device 1.

The first voltage-current diagram reproduces the waveform of the intermittent voltage V, which has a maximum known value $V_{cc}$ and respective rising edges $V_s$, each having a duration ($t_{stop}$ - $t_{start}$) of about 350 milliseconds.

The first sub-period falls within the duration of the rising edge and has a duration ($t_{max}$ - $t_{min}$) of about 200 milliseconds.

The first supremum of time $t_{max}$ will be substantially coincident with the end time $t_{stop}$ of the rising edge $V_s$.

Furthermore, a second sub-period $T_2$ is provided, which is complementary to the first, and has the second infimum of time $t_{min}$' coincident with the time $t_{start}$ of the rising edge $V_s$.

In this representation, the first $T_1$ and the second $T_2$ sub-periods are contiguous and the sum of their durations is substantially equal to the duration ($t_{stop}$ - $t_{start}$) of the rising edge $V_s$ of the intermittent voltage V.

The second diagram of FIG. 5 shows the electric current absorption $I_B$ by the incandescent lamps B only, whereas the third diagram shows the electric current absorption $I_L$ by the LED indicators L only.

A point-to-point addition of the second and third diagrams will provide the total electric current absorbed with time by the series $D_1$, $D_2$ in response to the application of the intermittent voltage V.

During the second sub-period $T_2$, at the time $t_2$, situated at about 125 milliseconds from the second infimum of time thereof, the measuring unit 3 will be designed to measure the second value of the electric current absorbed by the incandescent lamps B and the LED indicators L respectively.

Furthermore, at the time $t_3$, 10 milliseconds after the time $t_2$, the peripheral control unit 10, 10' will detect the electric current $I_L$ absorbed by the LED indicators L only.

If such detection has a positive result, during the first sub-period $T_1$, the measuring unit 3 will add the fictitious load LOAD during an addition time $\Delta T$ of 40 milliseconds.

The fictitious load LOAD may be applied at a time substantially coincident with the first infimum of time $t_{min}$ of the first sub-period $T_1$.

During the addition of the fictitious LOAD and at the time $t_1$, the measuring unit 3 will measure the first absorbed current value $I_1$, using the above formula.

Then, the processor 6 will generate the differential electric parameter P between the electric current measured at the time $t_2$ and the electric current measured at the time $t_1$ and will compare the resulting value with the reference value $I_{RIF}$ associated with the current $I_{LOAD}$ absorbed by the fictitious load LOAD only.

During the first intermittency cycle, the control device 1 will generate no error signal E, as the calculated electric parameter P will substantially coincide with the reference value $I_{RIF}$.

The same succession of steps will be also carried out by the control device 1 during the second intermittency period, before which one or more LED indicators L will be assumed to be broken, as shown in the right side of the diagram of Fig. 5.

In this case, the first value $I_1$' of the current measured by the measuring unit 3 in the first sub-period $T_1$' at the time $t_1$', will be slightly different from the second value $I_2$' thereof, as measured at the time $t_2$' in the second sub-period $T_2$'.

In fact, the current $I_L$ absorbed by the LED indicators only, as detected at the time $t_3$' has a substantially zero value and the measuring unit 3 will not send the control signal $S_c$ associated with the addition of the fictitious load LOAD to the peripheral unit 10, 10'.

In this case, the fictitious load LOAD will not be added during the first sub-period $T_1$' and the first value $I_1$' of the measured electric current will not include the electric current component $I_{LOAD}$ absorbed by the load.

Hence, the first current value $I_1$' detected by the measuring unit 3 at the time $t_1$' will be substantially equal to the second current value $I_2$', as measured before the time $t_2$'.

Then, the processor 6 will generate an electric parameter P associated with a substantially zero differential, and its value will be substantially lower than that of the reference value $I_{RIF}$.

The processor 6 will generate and send the error signal E to the electronic power supply unit 2 that will act upon the detection circuit 9, which will increase the intermittency frequency F to the maximum value associated with a malfunction of the turn signal indicator system S.

The above description clearly shows that the invention fulfills the intended objects, and particularly the object of providing a method for controlling a turn signal indicator system of a vehicle and a control device implementing such method, that are easy to install and require no further refreshing step for their operation.

The control method and device of this invention are susceptible to a number of changes or variants, within the inventive concept disclosed in the annexed claims. All the details thereof may be replaced by other technically equivalent parts, and the materials may vary depending on different needs, without departure from the scope of the invention.

While the control method and device have been described with particular reference to the accompanying figures, the numerals are only used for the sake of a better intelligibility of the invention and shall not be intended to limit the claimed scope in any manner.

**Claims**

1. A method for controlling the operation of the turn signal indicators assembly (S) for a vehicle, wherein the assembly (S) comprises two light series ($D_1$, $D_2$) associated to respective maneuver directions and each comprising at least one or more LED indicator (L) and at least one incandescent lamp (B), wherein the method comprises the following steps:

   a) applying an electric intermittent voltage (V) having predetermined frequency (F) and period (T=1/F) to at least one lighting series ($D_1$, $D_2$);
   b) measuring a first electric current value ($I_1$) absorbed by the indicator series ($D_1$, $D_2$) during a first predetermined sub-period (Ti);
   c) generating an electric parameter (P) associated with the absorbed first electric current value ($I_1$);
   d) defining a reference electric current value ($I_{RIF}$);
   e) comparing said electric absorbed electric current parameter (P) with said reference value ($I_{RIF}$) to generate an error signal (E);
   f) increasing the frequency (F) of said intermittent electric voltage (V) in response to said error signal (E) for signaling the fault of the assembly (S);

   wherein before said step (e) of generation of an error signal (E), a step (g) of measuring a second electric current value ($I_2$) absorbed by the above series ($D_1$, $D_2$) in a second sub-period ($T_2$) distinct from the first one is provided;
**characterized in that** said parameter (P) is equal to the difference between said first ($I_1$) and said second value ($I_2$) of the absorbed current, and **in that** a further step (h) is provided of inserting a predetermined arbitrary electric load (LOAD) in parallel to one or more LED indicators (L) of the series ($D_1$, $D_2$) during said first sub-period ($T_1$), said first current value ($I_1$) being equal to the absorbed electric current ($I_{LOAO}$) with said arbitrary load (LOAD), said second value ($I_2$) of the absorbed current being equal to the electric current absorbed by at least one series ($D_1$, $D_2$) when the arbitrary load (LOAD) is disconnected, said reference value ($I_{RIF}$) being substantially equal to the value of the electric current ($I_{LOAD}$) absorbed only by said arbitrary load (LOAD).

2. Method as claimed in claim 1, **characterized by** providing a step (i) of periodic detection of the electric current absorbed by at least one series ($D_1$, $D_2$) during said first sub-period ($T_1$), said first electric value ($I_1$) being exclusively measured when said periodic detection detects a current value substantially correlated to the electric current ($I_{LOAD}$) absorbed by the arbitrary load (LOAD).

3. Method as claimed in claim 2, **characterized by** providing a step (l) of detecting an electric current ($I_L$) absorbed only by one or more LED indicators (L), said step (h) of inserting said arbitrary load being carried out only at the detection of said electric current ($I_L$) absorbed in said step (l).

4. Method as claimed in claim 3, **characterized by** providing a step (m) of detection of a third electric current value ($I_3$) substantially equal to the electric current ($I_B$) absorbed only by a electric bulb (B), said error signal (E) being also generated as said current value ($I_2$) is lower than said third current value ($I_3$), said steps from (b) to (l), with exclusion of the step (d), being repeated for each flashing cycle of said electric voltage (V).

5. Method as claimed in any preceding claim, **characterized in that** said reference current value ($I_{RIF}$) is determined by a predetermined mapping included between a minimum and a maximum value in response to the change of the amplitude of said flashing voltage (V).

6. Method as claimed in any preceding claim, **characterized in that** said first measured value ($I_1$) and said second measured value ($I_2$) are determined by a single acquisition of the electric current absorbed by at least one series ($D_1$, $D_2$) and/or by the average value of a plurality of current samples acquired in respective measuring intervals comprised, respectively, in said first ($T_1$) and said second sub-period ($T_2$).

7. A control device for turn indicators assembly (S) of a vehicle, wherein each assembly (S) comprises two lighting series ($D_1$, $D_2$) associated with respective maneuver directions and each comprising at least one LED indicator (L) and at least one incandescent lamp (B) and wherein the device (1) operates according the method defined in one or more preceding claims, which device (1) comprises:

  - an electronic unit (2) for feeding the lighting series ($D_1$, $D_2$) with an intermittent electric voltage (V) with predetermined frequency (F) and period (T);
  - a unit (3) for measuring the values ($I_1$, $I_2$) of the electric current absorbed by at least one lighting series ($D_1$, $D_2$);
  - a memory area (4) comprised into said measuring unit (3) and designed to store a reference value ($I_{RIF}$) of the electric current;
  - comparison means (5) featured in said measuring unit (3) and designed to compare said current absorbed values ($I_1$, $I_2$) with said reference value ($I_{RIF}$) to generate an error signal (E);

  wherein said measuring unit (3) is designed to send said error signal (E) to said feeding unit (2) and bring the frequency (F) to the maximum value ($F_{MAX}$) in response to said error signal (E) and warning of the mulfunctioning of the assembly (S);
  **characterized in that** said values ($I_1$, $I_2$) have respective measuring time comprising a first sub-period ($T_1$) and a second ($T_2$) sub-period, at least one peripheral control unit (10, 10') being further provided which is designed to detect the absorption of current ($I_L$) by the LED indicators (L) of a series ($D_1$, $D_2$) at a third sub-period ($T_3$) preceding the first ($T_1$) and to insert a predetermined arbitrary electric load (LOAD) in parallel thereto as the current is detected.

**Patentansprüche**

1. Verfahren zur Steuerung des Betriebs der Fahrtrichtungsanzeigereinheit (S) eines Fahrzeugs, wobei die Einheit (S) zwei Lichtreihen ($D_1$, $D_2$) aufweist, die jeweils Fahrtrichtungen zugeordnet sind und jede mindestens eine oder mehrere LED-Anzeiger (L) aufweist und mindestens eine Glühlampe (B), wobei das Verfahren die folgenden Schritte aufweist:

  a) Anlegen einer elektrischen Wechselspannung (V) mit vorbestimmten Frequenzen (F) und Periode (T = 1/F) an mindestens eine Lichtreihe ($D_1$, $D_2$),
  b) Messen eines ersten elektrischen Stromwerts ($I_1$), der von den Anzeigereihen ($D_1$, $D_2$) aufgenommen wird während einer ersten vorbestimmten Teilperiode ($T_1$),

  c) Erzeugen eines elektrischen Parameters (P), der dem aufgenommenen, ersten elektrischen Stromwert ($I_1$) zugeordnet ist,
  d) Bestimmen eines elektrischen Referenz-Stromwerts ($I_{RIF}$),
  e) Vergleichen des elektrisch aufgenommenen, elektrischen Stromparameters (P) mit dem Referenzwert ($I_{RIF}$), um ein Fehlersignal (E) zu erzeugen,
  f) Erhöhen der Frequenz (F) der elektrischen Wechselspannung (V) in Abhängigkeit von dem Fehlersignal (E), um den Ausfall der Einheit (S) anzuzeigen,

  wobei vor dem Schritt (e) des Erzeugens eines Fehlersignals (E) ein Mess-Schritt (g) eines zweiten elektrischen Stromwerts ($I_2$) vorgesehen ist, der von den obigen Reihen ($D_1$, $D_2$) in einer zweiten Teilperiode ($T_2$), die sich von der ersten unterscheidet, aufgenommen ist,
  **dadurch gekennzeichnet, dass** der Parameter (P) gleich der Differenz zwischen dem ersten ($I_1$) und dem zweiten Wert ($I_2$) des aufgenommenen Stroms ist und, dass ein weiterer Schritt (h) des Einsetzens einer vorbestimmten, willkürlichen elektrischen Last (LOAD) parallel zu einem oder mehreren LED-Anzeigern (L) der Reihen ($D_1$, $D_2$) vorgesehen ist während der ersten Teilperiode ($T_1$), wobei der erste Stromwert ($I_1$) gleich ist dem mit der willkürlichen elektrischen Last (LOAD) aufgenommenen elektrischen Strom ($I_{LOAD}$), der zweite Wert ($I_2$) des aufgenommenen Stroms gleich ist dem elektrischen Strom, der aufgenommen wird von mindestens einer der Reihen ($D_1$, $D_2$), wenn die willkürliche Last (LOAD) getrennt ist, wobei der Referenzwert ($I_{RIF}$) im wesentlichen gleich ist dem Wert des elektrischen Stroms ($I_{LOAD}$), der ausschließlich von der willkürlichen Last (LOAD) aufgenommen wird.

2. Verfahren gemäß Anspruch 1, **gekennzeichnet durch** Vorsehen eines Schritts (i) periodischer Erfassung des elektrischen Stroms, der von mindestens einer der Reihen ($D_1$, $D_2$) während der ersten Teilperiode ($T_1$) aufgenommen wird, wobei der erste elektrische Wert ($I_1$) ausschließlich gemessen wird, wenn die periodische Erfassung einen Stromwert feststellt, der im wesentlichen dem elektrischen Strom ($I_{LOAD}$) zuordenbar ist, der von der willkürlichen Last (LOAD) aufgenommen wird.

3. Verfahren gemäß Anspruch 2, **gekennzeichnet durch** Vorsehen eines Schritts (l) der Erfassung eines elektrischen Stroms ($I_L$), der aufgenommen wird von ausschließlich einem oder mehreren LED-Anzeigern (L), wobei der Schritt (h) des Einsetzens der willkürlichen Last (LOAD) nur ausgeführt wird bei der Erfassung des elektrischen Stroms ($I_L$), der in dem Schritt (l) aufgenommen wird.

**4.** Verfahren gemäß Anspruch 3, **gekennzeichnet durch** Vorsehen eines Schritts (m) der Erfassung eines dritten elektrischen Stromwerts ($I_3$), der im wesentlichen gleich ist zu dem elektrischen Strom ($I_B$), der ausschließlich von einer elektrischen Birne (B) aufgenommen wird, wobei das Fehlersignal (E) auch erzeugt wird, wenn der Stromwert ($I_2$) niedriger ist als der dritte Stromwert ($I_3$), wobei die Schritte von (b) bis (I) mit Ausnahme des Schritts (d) wiederholt werden für jeden Leuchtzyklus der elektrischen Spannung (V).

**5.** Verfahren gemäß einem der vorhergehenden Ansprüche, **gekennzeichnet durch** Bestimmen des Referenz-Stromwerts ($I_{RIF}$) mittels einer vorbestimmten Zuordnung, die zwischen einem Minimum- und einem Maximum-Wert enthalten ist in Abhängigkeit auf die Änderung der Amplitude der Leuchtspannung (V).

**6.** Verfahren gemäß einem der vorhergehenden Ansprüche, **gekennzeichnet durch** Bestimmen des ersten gemessenen Werts ($I_1$) und des zweiten gemessenen Werts ($I_2$) mittels einer einzigen Beschaffung des elektrischen Stroms, der von mindestens einer der Reihen ($D_1$, $D_2$) aufgenommen wird und/oder mittels des Durchschnittswerts einer Vielzahl von Stromwerten, die beschafft wurden in jeweiligen Messintervallen, die jeweils in der ersten ($T_1$) und der zweiten Teilperiode ($T_2$) enthalten sind.

**7.** Steuervorrichtung für Fahrtrichtungsanzeigereinheit (S) eines Fahrzeugs, wobei jede Einheit (S) zwei Lichtreihen ($D_1$, $D_2$) aufweist, die jeweils Fahrtrichtungen zugeordnet sind und jede mindestens einen LED-Anzeiger (L) aufweist und mindestens eine Glühlampe (B) aufweist und wobei die Vorrichtung (1) betrieben wird gemäß dem Verfahren bestimmt in einem oder mehreren vorhergehenden Ansprüchen, wobei die Vorrichtung (1) aufweist:

- eine elektronische Einheit (2) zur Versorgung der Lichtreihen ($D_1$, $D_2$) mit einer elektrischen Wechselspannung (V) mit vorbestimmter Frequenz (F) und Periode (T),
- eine Einheit (3) zum Messen der Werte ($I_1$, $I_2$) des elektrischen Stroms der von mindestens einer der Lichtreihen ($D_1$, $D_2$) aufgenommen wird,
- einen Speicherbereich (4), der in der Messeinheit (3) enthalten ist und ausgelegt ist einen Referenzwert ($I_{RIF}$) des elektrischen Stroms zu speichern,
- Vergleichseinrichtungen (5), die in der Messeinheit (3) enthalten sind und ausgelegt sind, die aufgenommenen Stromwerte ($I_1$, $I_2$) mit dem Referenzwert ($I_{RIF}$) zu vergleichen, um ein Fehlersignal (E) zu erzeugen,

wobei die Messeinheit (3) ausgelegt ist, das Fehlersignal (E) an die Versorgungseinheit (2) zu senden und die Frequenz (F) auf den Maximalwert (**F$_{MAX}$**) zu bringen in Abhängigkeit von dem Fehlersignal (E) und Warnen vor der Fehlfunktion der Einheit (S), **dadurch gekennzeichnet, dass** die Werte ($I_1$, $I_2$) eine jeweilige Messzeit haben mit einer ersten Teilperiode ($T_1$) und einer zweiten Teilperiode ($T_2$), wobei mindestens eine weitere Rand-Steuereinheit (10, 10') vorgesehen ist, die ausgelegt ist die Aufnahme des Stroms ($I_L$) durch die LED-Anzeiger (L) der Reihen ($D_1$, $D_2$) zu erfassen bei einer dritten Teilperiode ($T_3$), die der ersten ($T_1$) vorher geht und eine vorbestimmte, willkürliche elektrische Last (LOAD) parallel dazu einzusetzen, wenn der Strom erfasst wird.

**Revendications**

**1.** Procédé pour contrôler le fonctionnement du groupe d'indicateurs de direction (S) pour un véhicule, où le groupe (S) comprend deux séries de lumières ($D_1$, $D_2$) associées à des directions de manoeuvre respectives et comprenant chacune au moins un ou plusieurs indicateurs à LEDs (L) et au moins une ampoule à incandescence (B), où le procédé comprend les étapes suivantes :

a) Appliquer un voltage électrique intermittent (V) ayant une fréquence prédéterminée (F) et une durée (T=1/F) à au moins une série de lumières ($D_1$, $D_2$) ;
b) mesurer une première valeur de courant électrique ($I_1$) absorbé par la série d'indicateurs ($D_1$, $D_2$) au cours d'une première sous-période déterminée ($T_1$) ;
c) générer un paramètre électrique (P) associé à la première valeur de courant électrique absorbé ($I_1$) ;
d) définir une valeur de courant électrique de référence ($I_{RIF}$);
e) comparer ledit paramètre de courant électrique absorbé (P) avec ladite valeur de référence ($I_{RIF}$) pour générer un signal d'erreur (E) ;
f) augmenter la fréquence (F) dudit voltage électrique intermittent (V) en réponse audit signal d'erreur (E) pour signaler le défaut du groupe (S) ;

où avant la susdite étape (e) de génération d'un signal d'erreur (E) est prévue une étape (g) de mesure d'une deuxième valeur de courant électrique ($I_2$) absorbé par les susdites séries ($D_1$ $D_2$) au cours d'une deuxième sous-période ($T_2$) distincte de la première; **caractérisé en ce que** ledit paramètre (P) est égal à la différence entre ladite première ($I_1$) et ladite deuxième valeur ($I_2$) du courant absorbé, et **en ce**

**qu'**on a prévu une étape supplémentaire (h) d'insertion d'une charge électrique arbitraire prédéterminée (LOAD) en parallèle à un ou plusieurs indicateurs à LEDs (L) des séries ($D_1$, $D_2$) au cours de ladite première sous-période ($T_1$), ladite première valeur de courant ($I_1$) étant égale au courant électrique absorbé ($I_{LOAD}$) avec ladite charge arbitraire (LOAD), ladite deuxième valeur ($I_2$) du courant absorbé étant égale au courant électrique absorbé par au moins une série ($D_1$, $D_2$) lorsque la charge arbitraire (LOAD) est déconnectée, ladite valeur de référence ($I_{RIF}$) étant essentiellement égale à la valeur du courant électrique ($I_{LOAD}$) uniquement absorbé par ladite charge arbitraire (LOAD).

**2.** Procédé selon la revendication 1, **caractérisé par le fait qu'**il prévoit une étape (i) de détection périodique du courant électrique absorbé par au moins une série ($D_1$, $D_2$) au cours de ladite première sous-période ($T_1$), ladite première valeur électrique ($I_1$) étant exclusivement mesurée quand ladite détection périodique relève une valeur de courant essentiellement liée au courant électrique ($I_{LOAD}$) absorbé par la charge arbitraire (LOAD).

**3.** Procédé selon la revendication 2, **caractérisé par le fait qu'**il prévoit une étape (I) de détection d'un courant électrique ($I_L$) uniquement absorbé par un ou plusieurs indicateurs à LEDs (L), ladite étape (h) d'insertion de ladite charge arbitraire étant exclusivement réalisée à la détection dudit courant électrique ($I_L$) absorbé au cous de ladite étape (I).

**4.** Procédé selon la revendication 3, **caractérisé par le fait qu'**il prévoit une étape (m) de détection d'une troisième valeur de courant électrique ($I_3$) essentiellement égale au courant électrique ($I_B$) uniquement absorbé par une ampoule (B), ledit signal d'erreur (E) étant également généré puis que ladite valeur de courant ($I_2$) est inférieure à ladite troisième valeur de courant ($I_3$), lesdites étapes de (b) à (I), à l'exception de l'étape (d), étant répétée pour chaque cycle de clignotement du dit voltage électrique (V).

**5.** Procédé selon l'une des revendications précédentes, **caractérisé en ce que** ladite valeur de courant de référence ($I_{RIF}$) est déterminée par une configuration prédéterminée comprise entre une valeur minimale et une valeur maximale en réponse au changement d'amplitude dudit voltage de clignotement (V).

**6.** Procédé selon l'une des revendications précédentes, **caractérisé en ce que** ladite première valeur mesurée ($I_1$) et ladite deuxième valeur mesurée ($I_2$) sont déterminées par une saisie individuelle du courant électrique absorbé par au moins une série ($D_1$, $D_2$) et/ou parla valeur moyenne d'une pluralité d'échantillons de courant saisis en mesurant respectivement des intervalles compris, respectivement, dans ladite première (T1) et ladite deuxième sous-période ($T_2$).

**7.** Dispositif de commande pour le groupe d'indicateurs de direction (S) d'un véhicule, où chaque groupe (S) comprend deux séries de lumières (D1, D2) associées à des directions de manoeuvre respectives et comprenant chacune au moins un ou plusieurs indicateurs à LEDs (L) et au moins une ampoule à incandescence (B), où le dispositif (1) agit selon le procédé défini dans une ou plusieurs des revendications précédentes, ledit dispositif (1) comprenant:

- une unité électronique (2) pour alimenter les séries de lumières (D1, D2) avec un voltage électrique intermittent (V) avec une fréquence (F) et une durée (T) predéterminées;
- une unité (3) pour mesurer les valeurs ($I_1$, $I_2$) du courant électrique absorbé par au moins une série de lumières ($D_1$, $D_2$) ;
- une zone de mémoire (4) comprise dans ladite unité de mesure (3) et conçue pour mémoriser une valeur de référence ($I_{RIF}$) du courant électrique ;
- moyen de comparaison (5) présent dans ladite unité de mesure (3) et conçu pour comparer les dites valeurs du courant absorbé ($I_1$, $I_2$) avec ladite valeur de référence ($I_{RIF}$) pour générer un signal d'erreur (E);

où ladite unité de mesure (3) est conçue pour envoyer ledit signal d'erreur (E) à ladite unité d'alimentation (2) et amener la fréquence (F) à la valeur maximale ($F_{MAX}$) en réponse audit signal d'erreur (E) et d'alerte du dysfonctionnement du groupe (S) ; **caractérisé en ce que** lesdites valeurs ($I_1$, $I_2$) ont un temps de mesure respectif comprenant une première sous-période ($T_1$) et une deuxième ($T_2$) sous-période, au moins une unité de commande périphérique (10, 10') étant également prévue, conçue pour détecter l'absorption du courant ($I_L$) de la part des indicateurs à LEDS (L) d'une série ($D_1$, $D_2$) durant une troisième sous-période ($T_3$) précédant la première ($T_1$) et pour insérer une charge électrique arbitraire prédéterminée (LOAD) en parallèle à celle-ci alors que le courant est détecté.

**FIG. 1**

**FIG. 2**

FIG. 3

FIG. 4

*FIG. 5*

**EP 2 540 570 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1360088 A
- DE 102006015053